Europäisches Patentamt

European Patent Office

Office européen des brevets

(19)

(11) **EP 1 505 462 A2**

(12) **EUROPEAN PATENT APPLICATION**

(43) Date of publication:
**09.02.2005 Bulletin 2005/06**

(51) Int Cl.7: **G05B 19/05**

(21) Application number: **04254651.5**

(22) Date of filing: **02.08.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **05.08.2003 JP 2003287017**<br><br>(71) Applicant: **FANUC LTD**<br>**Minamitsuru-gun, Yamanashi 401-0597 (JP)**<br><br>(72) Inventors:<br>• **Nagashima, Noritake Room 8-303 FANUC**<br>**Minamitsuru-gun Yamanashi 401-0511 (JP)** | • **Hasegawa, Satoshi Room 10-104 FANUC**<br>**Minamitsuru-gun Yamanashi 401-0511 (JP)**<br>• **Matsukawa, Toshinori**<br>**Yamanashi, 403-0005 (JP)**<br><br>(74) Representative: **Billington, Lawrence Emlyn**<br>**Haseltine Lake,**<br>**Imperial House,**<br>**15-19 Kingsway**<br>**London WC2B 6UD (GB)** |

(54) **Programmable controller**

(57)     A programmable controller capable of automatically adjusting a percentage of execution period for each of a plurality of sequence programs according to a desired condition. By executing the sequence programs according to predetermined execution percentages, execution time for each of the sequence programs, which is the time actually required for one execution of each of the sequence programs, is measured (100). The total of lengths of the execution time measured for each sequence program is obtained (101), and the minimum number of execution cycles for obtaining this total execution time is obtained (102). On the assumption that the sequence programs are executed in this minimum number of execution cycles, time required for execution of each of the sequence programs in one execution cycle is obtained (103). On the basis of the time required for execution of each of the sequence programs thus obtained, an execution percentage for each of the sequence programs in one execution cycle is calculated and fixed (104). Thus, one execution of the sequence programs is finished in the same scan time. It is also possible to assign the sequence programs execution percentages in one execution cycle (105), so that predetermined targets for scan time, or a predetermined target scan time ratio will be achieved.

FIG. 2

START

100 — EXECUTE SEQUENCE PROGRAMS ACCORDING TO PREDETERMINED EXECUTION PERIOD PERCENTAGES, AND MEASURE ACTUAL EXECUTION TIME FOR EACH SEQUENCE PROGRAM

101 — CALCULATE TOTAL EXECUTION TIME FOR EACH SEQUENCE PROGRAM

102 — CALCULATE MINIMUM NUMBER OF EXECUTION CYCLES REQUIRED FOR TOTAL EXECUTION TIME

103 — CALCULATE EXECUTION PERIOD FOR EACH SEQUENCE PROGRAM IN ONE EXECUTION CYCLE

104 — CALCULATE EXECUTION PERIOD PERCENTAGES FOR SEQUENCE PROGRAMS BASED ON ALLOTTED EXECUTION PERIODS IN ONE EXECUTION CYCLE

105 — SET CALCULATED EXECUTION PERIOD PERCENTAGES

END

EP 1 505 462 A2

**Description**

BACKGROUND OF THE INVENTION

1. Field of the Invention

The present invention relates to a programmable controller for executing sequence programs.

2. Description of Related Art

A programmable controller controls a numerical controller of a numerical control apparatus (M function, T function), peripheral devices of a machine (a workpiece loader, an automatic tool changer (ATC)) and the like by executing a sequence program.

In recent years, sophistication of machines has been proceeding. In some cases, a new peripheral device is added to a machine system. In such cases, mostly a control program for controlling the added peripheral device is added to the sequence program for the programmable controller. There are also cases in which in order to automate a machine, a control program for automation is added to the sequence program. As a result, the number of programs constituting the sequence program executed by the programmable controller increases, which makes it difficult to maintain and manage the sequence program.

In a technique recently used to solve this problem and make the maintenance of the sequence program easy, a sequence program for controlling basic parts of a machine and sequence programs for controlling peripheral devices added are made individually, and a processor of a programmable controller executes those sequence programs in turn fraction by fraction, so that it looks like the processor executes the sequence programs in parallel.

In order to make the processor execute the sequence programs in parallel, an allotting ratio of execution periods for the individual sequence programs in one execution cycle is predetermined, and the processor is made to execute the sequence programs fraction by fraction according to the predetermined allotting ratio. There is not known a programmable controller that automatically changes the allotting ratio of execution periods, to which the present invention relates, or a publication disclosing such programmable controller.

In the case in which a plurality of sequence programs are executed fraction by fraction in parallel according to predetermined allotting ratio of execution periods, if a proportion of the execution period for the sequence program for the numerical controller and the execution period for the sequence programs for the peripheral devices is inappropriate, execution of the sequence programs as a whole may be inefficient.

SUMMARY OF THE INVENTION

The present invention provides a programmable controller capable of automatically adjusting a ratio of allotting an execution period for each of a plurality of sequence programs according to a desired condition.

A programmable controller of the present invention executes a plurality of sequence programs by repeating an execution cycle of successively executing fractions of the plurality of sequence programs.

According to a first aspect of the present invention, the programmable controller comprises: measuring means for measuring total execution time taken for actually executing each of the plurality of sequence programs; and execution period allotting ratio calculating means for calculating a ratio of allotting an execution period for each of the plurality of sequence programs in one execution cycle such that lengths of scan time of the plurality of sequence programs are the same based on the measured total execution time for each of the plurality of sequence programs, and thus the plurality of sequence programs are executed by repeating the execution cycle of successively executing fractions of the plurality of sequence programs according to the calculated execution period allotting ratio.

According to a second aspect of the present invention, the programmable controller comprises: input means for setting target scan time for each of the sequence programs; measuring means for measuring total execution time taken for actually executing each of the plurality of sequence programs; and execution period allotting ratio calculation means for calculating a ratio of allotting an execution period for each of the plurality of sequence programs in one execution cycle based on the set target scan time and the measured total execution time for each of the plurality of sequence programs, and thus the plurality of sequence programs are executed by repeating the execution cycle of successively executing fractions of the plurality of sequence programs according to the calculated execution period allotting ratio.

According to a third aspect of the present invention, the programmable controller comprises: input means for setting a target scan time ratio for the plurality of sequence programs; measuring means for measuring total execution time taken for actually executing each of the plurality of sequence programs; and execution period allotting ratio determining means for determining a ratio of allotting an execution period for each of the plurality of sequence programs in one execution cycle based on the set target scan time ratio and the measured total execution time for each of the plurality of sequence programs, and thus the plurality of sequence programs are executed by repeating the execution cycle of successively executing fractions of the plurality of sequence programs according to the determined execution period allotting ratio.

According to a fourth aspect of the present invention, the programmable controller comprises: means for determining the number of steps in each of the plurality of sequence programs; and execution period allotting ratio determining means for determining a ratio of allotting an execution period for each of the plurality of sequence programs in one execution cycle based on the determined number of steps in each of the sequence programs, and thus the plurality of sequence programs are executed by repeating the execution cycle of successively executing fractions of the plurality of sequence programs according to the determined execution period allotting ratio.

According to a fifth aspect of the present invention, the programmable controller comprises: measuring means for measuring total execution time taken for actually executing each of the plurality of sequence programs; condition input means for setting a condition for adjusting an execution period allotting ratio of allotting an execution period for each of the plurality of sequence programs in one execution cycle; and execution period allotting ratio determining means for determining the execution period allotting ratio based on the measured total time for each of the plurality of sequence programs and the set condition, and thus the plurality of sequence programs are executed by repeating the execution cycle of successively executing fractions of the plurality of sequence programs according to the determined execution period allotting ratio.

The condition inputting means may allow selection and inputting of one condition from among a condition of setting the same length of scan time of the plurality of sequence programs, a condition of setting a target scan time for each of the plurality of sequence programs, a condition of setting a target scan time ratio for the plurality of sequence programs, and a condition of calculating the execution period allotting ratio in accordance with a ratio of the numbers of steps in the plurality of sequence programs.

In the present invention, since the execution period allotting ratio for each of the plurality of sequence programs in one execution cycle is automatically determined according to a desired condition, the sequence programs can be executed efficiently. Further, also when a peripheral device or the like is added and the number of sequence programs increases, the optimum ratio of allotting execution periods for the respective sequence programs can be obtained.

BRIEF DESCRIPTION OF THE DRAWINGS

FIG. 1 is a block diagram showing relevant parts of a programmable controller common to embodiments of the present invention,

FIG. 2 is a flowchart regarding a first embodiment of the present invention,

FIGS. 3a-3e are diagrams for explaining an example of execution-period percentage adjustment in the first embodiment,

FIG. 4 is a flowchart regarding a second embodiment of the present invention,

FIGS. 5a-5g are diagrams for explaining an example of execution-period percentage adjustment in the second embodiment,

FIG. 6 is a flowchart regarding a third embodiment of the present invention,

FIGS. 7a-7f are diagrams for explaining an example of execution-period percentage adjustment in the third embodiment,

FIG. 8 is a flowchart regarding a fourth embodiment of the present invention, and

FIGS. 9a and 9b are diagrams for explaining an example of execution-period percentage adjustment in the fourth embodiment.

DETAILED DESCRIPTION

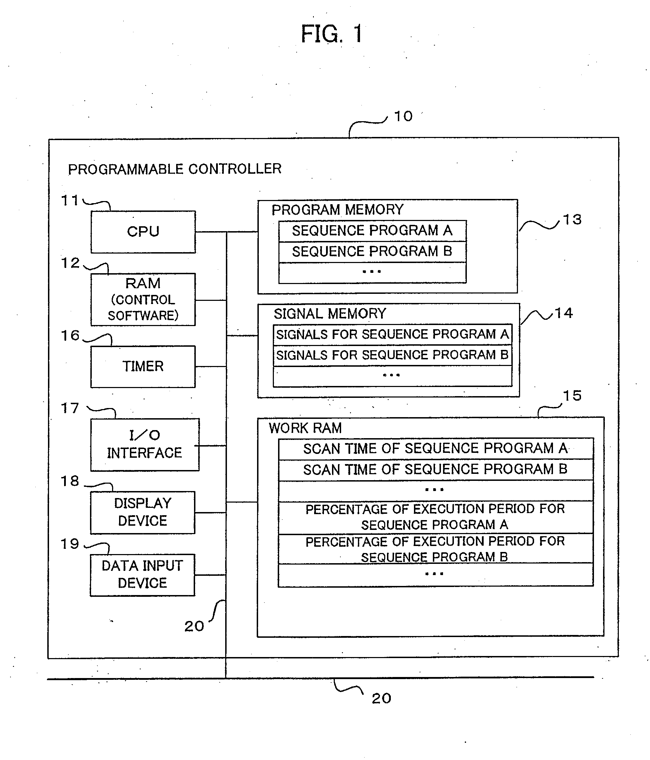

FIG. 1 is a block diagram showing relevant parts of a programmable controller that are common to embodiments of the present invention. In a programmable controller 10, a processor 11 for performing sequence control, RAM 12 for storing control software, program memory 13 formed of involatile RAM or the like for storing sequence programs, a signal memory 14 for storing DI/DO signals (input/output signals), and a work RAM 15 are connected to a bus 20. Further, a timer 16 for measuring operation time and the like, an I/O interface 17 connected to an I/O device, a display device 18 using liquid crystal, CRT or the like, a data input device 19 such as a keyboard for entering data and commands are also connected to the bus 20. It is to be noted that in the case in which the programmable controller 10 is connected to a numerical controller provided in a numerical control apparatus by the bas 20, a display device and an input device provided for the numerical controller double as the display device 18 and the data input device 19. Hence, the display device 18 and the data input device 19 do not need to be provided in the programmable controller 10.

The above-described hardware structure of the programmable controller 10 is not different from that of conventional programmable controllers. The programmable controller 10 is different from conventional programmable controllers in that software for adjusting the percentage of execution period for each sequence program in one execution cycle is stored in the RAM 12 for control software.

In the embodiments described below, a plurality of sequence programs are stored in the program memory 13. In the signal memory 14, a DI/DO signal table for storing input and output signals according to the sequence programs, etc. are provided. In the work RAM 15, scan time of each of the sequence programs (time required for one execution of each of the sequence programs), the percentage of execution period for each of the sequence programs in one execution cycle, etc. are stored.

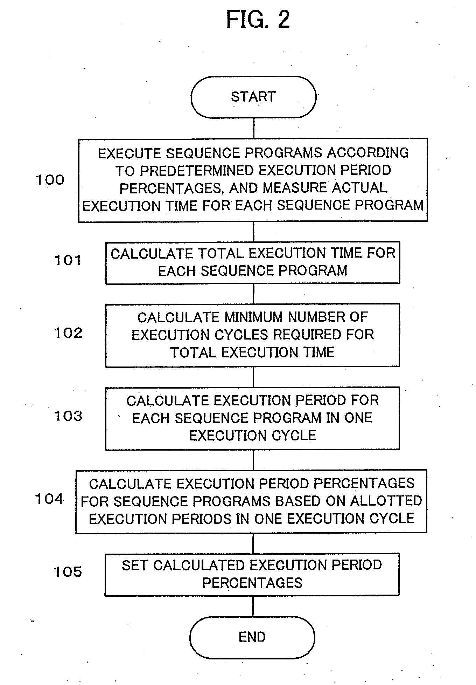

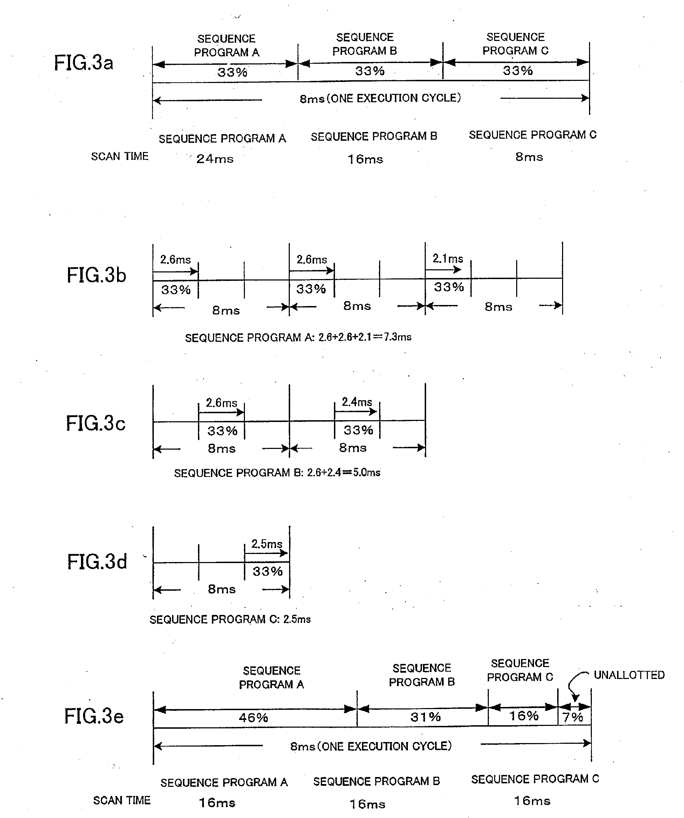

FIG. 2 is a flowchart showing the process of execution-period allotting ratio adjustment performed by the processor 11 of the programmable controller 10 in a first embodiment of the present invention, and FIGS. 3a-3e are diagrams for explaining execution-period allotting ratio adjustment in the first embodiment. In the first embodiment, the adjustment is so performed that the executed sequence programs will have the same length of scan time.

The programmable controller 10 automatically divides a period of one execution cycle equally by the number of installed sequence programs to determine the execution periods for the sequence programs. In other words, the programmable controller 10 assigns equal percentages of the execution period to the sequence programs installed. Alternatively, the execution ratio in which the sequence programs are executed is determined by an operator's operation of inputting an execution period for each of the sequence programs.

FIG. 3 a is a diagram for explaining automatic adjustment for achieving the same length of scan time, using an example in which three sequence programs A, B and C are installed. Before the automatic adjustment, the lengths of scan time for sequence programs A, B and C are 24ms, 16ms and 8ms, respectively. Before the automatic adjustment, the execution percentages for the individual sequence programs in one execution cycle are determined to be the same. In other words, the execution period 8ms is equally divided into 33% parts so that programs A, B and C will be each executed in one of the 33% parts.

In this first embodiment, when an adjustment command for achieving the same length of scan time is entered from the data input device 19, the processor 11 starts the process shown in FIG. 2.

First, the processor executes programs A, B and C according to the predetermined execution percentages and measures actual execution time for each of the sequence programs A, B and C (Step 100). FIGS. 3b to 3d are diagrams for explaining the measurement of execution time for each of the sequence programs. FIG. 3b shows the measurement of execution time for sequence program A. The scan time for sequence program A is 24ms, and therefore one execution of sequence program A is finished in three execution cycles. Suppose that according to the measurement, sequence program A is executed for 2.6ms, namely one third of the execution period, which is equal to the time assigned, in first and second execution cycles, and for 2.1ms in a third execution cycle, so that the actual execution time for sequence program A is 7.3ms in total.

FIG. 3c is a diagram for explaining the measurement of actual execution time for sequence program B. The scan time for sequence program B is 16ms, and therefore one execution of sequence program B is finished in two execution cycles. Suppose that according to the measurement, sequence program B is executed for 2.6ms in a first execution cycle, and for 2.4ms in a second execution cycle, so that the actual execution time for sequence program B is 5.0ms in total. Further, the scan time for sequence program C is 8ms, which is equal to the execution period, and suppose that according to the measurement, the actual execution time for sequence program B is 2.5ms as shown in FIG. 3d.

By adding the lengths of the actual execution time for the individual sequence programs measured this way, the total execution time is obtained (Step 101). In the example of FIGS. 3a-3e,

$$\text{Total execution time} = 7.3\text{ms}+5.0\text{ms}+2.5\text{ms} = 14.8\text{ms}.$$

Next, by dividing the total execution time by the period of one execution cycle and rounding the quotient up to the nearest integer, the minimum number of execution cycles for obtaining the total execution time is obtained (Step 102). In the example of FIGS. 3a-3e,

$$\text{total execution time/period of one execution cycle} = 14.8\text{ms}/8\text{ms}$$

$$= 1.85 \rightarrow 2.$$

By dividing the execution time measured for each sequence program by the minimum number of execution cycles obtained, an execution period for each sequence program in one execution cycle is obtained (Step 103). In the example of FIGS. 3a-3e,

sequence program A = 7.3ms/2 = 3.65ms,
sequence program B = 5.0ms/2 = 2.5ms, and
sequence program C = 2.5ms/2 = 1.25ms.

By dividing the obtained execution period for each sequence program in one execution cycle by the period of one execution cycle, the execution percentage for each sequence program is obtained (Step 104). In the example of FIGS. 3a-3e,

sequence program A = 3.65ms/8ms = 46%,
sequence program B = 2.5ms/8ms = 31%, and
sequence program C = 1.25ms/8ms = 16%.

The obtained percentages are set (Step 105), to terminate the automatic adjustment. In the manner described above, the adjustment is so performed that all the sequence programs installed will have the same length of scan time. In the example of FIGS. 3a-3e, as shown in FIG. 3e, the lengths of scan time for sequence programs A, B and C are all 16ms, and 46%, 31% and 16% of the execution period are allotted to programs A, B and C, respectively, so that one execution of programs A, B and C will be finished in two execution cycles. From this time on, the sequence programs are executed according to the execution percentages thus determined.

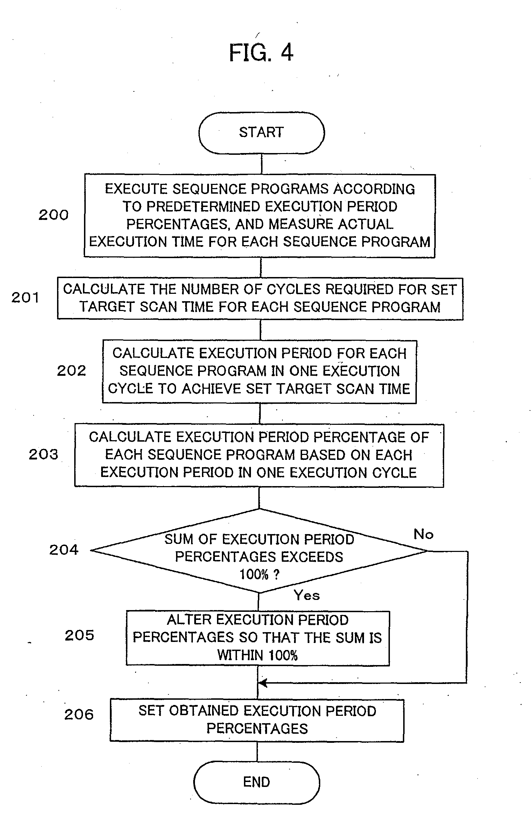

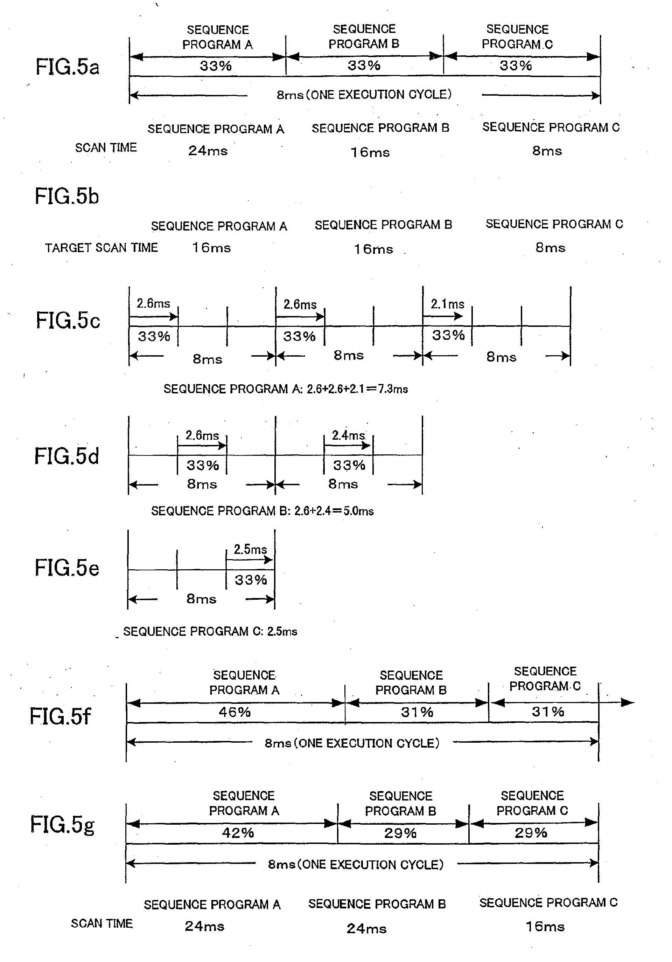

FIG. 4 is a flowchart showing the process of execution-period percentage adjustment performed by the processor 11 of the programmable controller 10 in a second embodiment of the present invention. In the second embodiment, targets for scan time for individual sequence programs are determined, and the percentages of execution period for the individual sequence programs are adjusted so that the targets for scan time will be achieved. FIGS. 5a-5g are diagrams for explaining the second embodiment using an example in which three sequence programs A, B and C are installed. In FIG. 5a, before automatic adjustment, the execution period (8ms) is divided according to predetermined execution percentages. Specifically, the period of one execution cycle (8ms) is equally divided into three parts corresponding to the number of the executed sequence programs so that the sequence programs will be each executed in one of the three parts. Here suppose that the scan time for sequence program A is 24ms (3 execution cycles), that for sequence program B is 16ms (2 execution cycles), and that for sequence program C is 8ms (1 execution cycle). Further, suppose that, as shown in FIG. 5b, by means of the data input device 19, a target for scan time for each sequence program is set as follows: sequence program A = 16ms (2 execution cycles), sequence program B = 16ms (2 execution cycles), and sequence program C = 8ms (1 execution cycle). When an automatic adjustment command is entered, the processor 11 of the programmable controller 10 starts the process shown as a flowchart in FIG. 4.

Like in the first embodiment, first the processor 11 executes the sequence programs according to the predetermined execution percentages, and measures actual execution time for each of the sequence programs (Step 200). FIGS. 5c to 5e show measurement of execution time for each of three sequence programs A, B and C, which are the same as FIGS. 3b to 3d in the first embodiment. As in the first embodiment, suppose that the actual execution time measured for each sequence program is as follows:

sequence program A = 7.3ms,
sequence program B = 5.0ms, and
sequence program C = 2.5ms.

Next, by dividing the target for scan time set for each sequence program by the period of one execution cycle (8ms), the number of execution cycles required for one execution of each sequence program is obtained (Step 201). In the example of FIGS. 5a-5g,

sequence program A = 16ms/8ms = 2 cycles,
sequence program B = 16ms/8ms = 2 cycles, and
sequence program C = 8ms/8ms = 1 cycle.

Next, by dividing the actual execution time for each sequence program obtained in Step 200 by the number of execution cycles required for one execution of each sequence program obtained in Step 201, an execution period for each sequence program in one execution cycle is obtained (Step 202). In the example of FIG.5,

sequence program A = 7.3ms/2 cycles = 3.65ms,

sequence program B = 5.0ms/2 cycles = 2.5ms, and
sequence program C = 2.5ms/1 cycle = 2.5ms.

Then, the percentage of the obtained execution period relative to the period of one execution cycle (8ms) is obtained (Step 203). In the example of FIGS. 5a-5g,

sequence program A = 3.65ms/8ms = 46%,
sequence program B = 2.5ms/8ms = 31%, and
sequence program C = 2.5ms/8ms = 31%.

Then whether the sum of the execution percentages obtained exceeds 100% or not is determined (Step 204). If not, the execution percentages obtained are set, to terminate the automatic adjustment. If the sum of the execution percentages exceeds 100%, readjustment is performed so that the sum of the execution percentages for the sequence programs will not exceed 100% (Step 205). In the present embodiment, on the basis of the ratio between the execution percentage for each sequence program and the sum of the execution percentages, a readjusted execution percentage for each sequence program is obtained. Specifically, by dividing the execution percentage for each sequence program by the sum of the execution percentages and multiplying the quotient by 100, the readjusted execution percentage for each sequence program is obtained. In the example of FIG. 5f, since the sum of the execution percentages exceeds 100%, readjustment is performed.

sequence program A = 46%×100/(46+31+31) = 42%,
sequence program B = 31%×100/(46+31+31) = 29%, and
sequence program C = 31%×100/(46+31+31) = 29%.

The execution percentages thus obtained are set as shown in FIG. 5g (Step 206). From this time on, the sequence programs are executed according to these execution percentages.
When the readjustment is performed, the targets for scan time are not achieved although the lengths of scan time close to the targets are obtained. For example, in the example of FIGS. 5a-5g, the lengths of scan time for sequence programs A, B and C are 24ms corresponding to 3 execution cycles, 24ms corresponding to 3 execution cycles, and 16ms corresponding to 2 execution cycles, which are different from the targets for scan time set by an instruction, namely sequence program A = 16ms, sequence program B = 16ms, and sequence program C =8ms. The fact that readjustment is needed means that the sequence programs cannot be executed in the lengths of scan time set as the targets. In this case, in place of performing readjustment, the current targets for scan time may be regarded as errors and replaced by new targets. Alternatively, a notice may be given to have an operator determine whether to replace the targets for scan time.
In this case, it may be arranged as follows: When it is determined in Step 204 that the sum of the execution-period percentages exceeds 100%, an alarm is given to advise that the targets for scan time should be replaced. When the targets for scan time are replaced, the steps from Step 201 downwards are performed. These steps are repeated until it is determined that the sum of the execution-period percentages does not exceed 100%. In the case in which an alarm is given so that the targets for scan time will be replaced, it may be arranged as follows: Whether the sum of the execution periods for the individual sequence programs in one execution cycle obtained in Step 202 exceeds the period of one execution cycle (8ms) or not is determined. If the sum exceeds the period of one execution cycle, it is advised that the targets for scan time should be replaced. If not, Step 203 is performed, namely the execution percentages for the individual sequence programs are obtained, and then the execution percentages obtained are set.

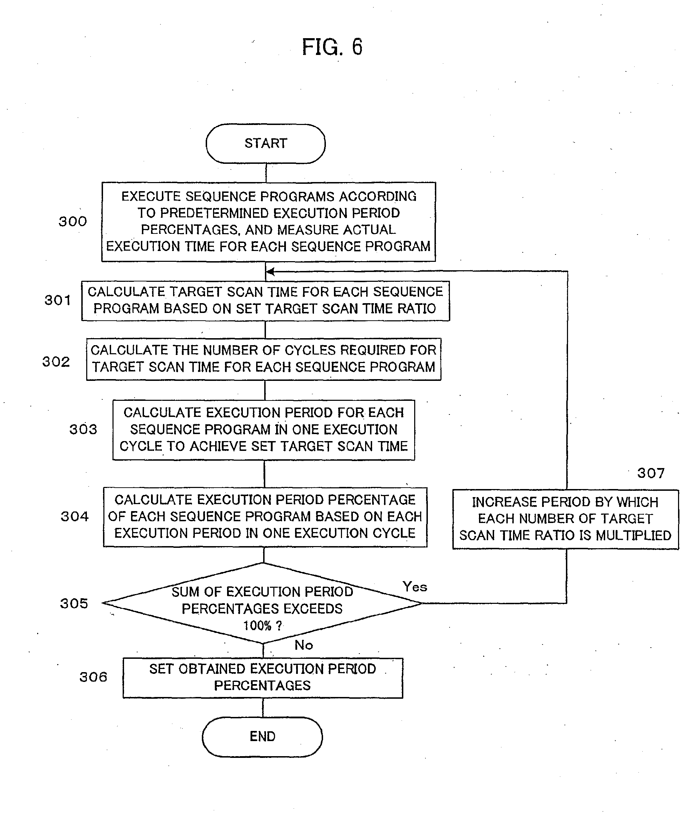

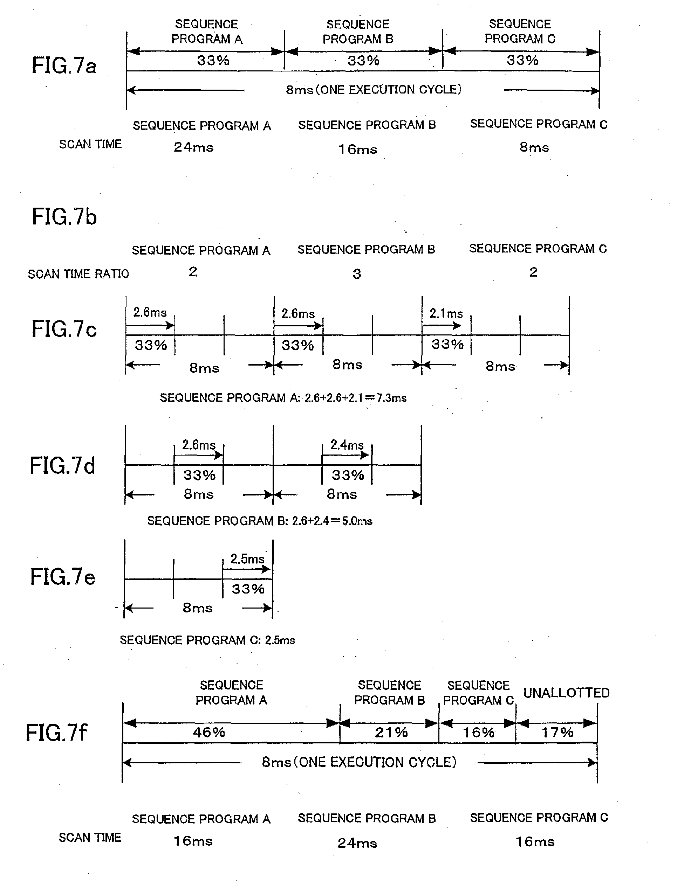

FIG. 6 is a flowchart showing the process of execution-period percentage adjustment performed by the processor 11 of the programmable controller in a third embodiment of the present invention. In the third embodiment, a target scan time ratio for sequence programs executed are determined, and the percentages of execution periods for the individual sequence programs are adjusted so that the target scan time ratio determined will be achieved. FIGS. 7a-7f are diagrams for explaining the third embodiment, using an example in which three sequence programs A, B and C are installed, as in the first and second embodiments. In FIG. 7a, before automatic adjustment, the period of one execution cycle (8ms) is divided according to predetermined execution percentages. Specifically, the period of one execution cycle (8ms) is equally divided into three parts corresponding to the number of the executed sequence programs so that the sequence programs will be each executed in one of the three parts. Here suppose that the scan time for sequence program is 24ms (3 execution cycles), that for sequence program B is 16ms (2 execution cycles), and that for sequence program C is 8ms (1 execution cycle). Further, suppose that, as shown in FIG. 7b, by means of the data input device 19, a target scan time ratio is set as follows: sequence program A : sequence program B : sequence program C = 2:3:2. When an automatic adjustment command is entered, the processor 11 of the programmable controller 10 starts the process shown as a flowchart in FIG. 6.

Like in the first and second embodiments, first the processor 11 executes the sequence programs according to the predetermined execution percentages, and measures actual execution time for each of the sequence programs (Step 300). FIGS. 7c to 7e show measurement of execution time for each of three sequence programs A, B and C. These are the same as FIGS. 3b to 3d in the first embodiment, and hence the explanation will be omitted. Suppose that, as shown in FIGS. 7a-7f, the actual execution time measured is as follows:

sequence program A = 2.6+2.6+2.1 = 7.3ms,
sequence program B = 2.6+2.4 = 5.0ms, and
sequence program C = 2.5ms.

Next, by multiplying each number of the target scan time ratio by the period of one execution cycle (8ms), the target for scan time for each sequence program is obtained (Step 301). In the example of FIGS. 7a-7f, the targets for scan time for sequence programs A, B and C are obtained as follows:

A:B:C = 2:3:2 = 16ms:24ms:16ms.

Next, the number of execution cycles corresponding to the target for scan time for each sequence program is obtained (Step 302). In the example of FIGS. 7a-7f,

sequence program A = 16ms/8ms = 2 cycles,
sequence program B = 24ms/8ms = 3 cycles, and
sequence program C = 16ms/8ms = 2 cycles.

Next, from the actual execution time obtained in Step 300 and the number of execution cycles obtained above, the execution period for each sequence program in one execution cycle required to achieve the target for scan time is obtained (Step 303). In the example of FIGS. 7a-7f,

sequence program A = 7.3ms/2 cycles = 3.65ms,
sequence program B = 5.0ms/3 cycles ≈ 1.67ms, and
sequence program C = 2.5ms/2 cycles = 1.25ms.

From the required execution period obtained, the execution percentage for each sequence program in one execution cycle is obtained (Step 304). In the example of FIGS. 7a-7f,

sequence program A = 3.65ms/8ms ≈ 46%,
sequence program B = 1.67ms/8ms ≈ 21%, and
sequence program C = 1.25ms/8ms ≈ 16%.

Whether the sum of the execution percentages obtained exceeds 100% or not is determined (Step 305). If not, the execution percentages obtained are set (Step 306). If the sum exceeds 100%, the execution percentages obtained are not feasible. In this case, the period by which each number of the target scan time ratio is multiplied is increased by a period corresponding to the period of one execution cycle (Step 307), and the processing of Step 301 and the subsequent steps is performed. In the above example, the period by which each number of the target scan time ratio is multiplied is the period of one execution cycle of 8ms, and thus it is increased to 16ms by adding the period of one execution cycle.
In this way, the feasible execution percentages in one execution cycle that achieve the target scan time ratio is obtained and fixed (Step 306).
In the example of FIGS. 7a-7f, as mentioned above, the percentages of execution periods for sequence programs A, B and C in one execution cycle obtained from the targets for scan time obtained by multiplying each number of the target scan time ratio by the execution period 8ms are 46%, 21% and 16%, and the total of them does not exceed 100%. Thus, as shown in FIG. 7f, the lengths 16ms, 24ms and 16ms of scan time for sequence programs A, B and C, and the percentages 46%, 21%, and 16% of execution period for sequence programs A, B and C in one execution cycle are set. From this time on, the sequence programs are executed according to these fixed execution-period percentages.
Also in the third embodiment, it may be arranged as follows: Whether the sum of the execution periods allotted to the individual sequence programs in one execution cycle obtained in Step 303 exceeds the period of one execution cycle (8ms) or not is determined. If the sum exceeds the execution period, Step 307 is performed. When it is determined that the sum of the execution periods allotted to the individual sequence programs in one execution cycle obtained in Step 303 is within the period of one execution cycle (8ms), Step 304 is performed to calculate the percentages of execution periods for the individual sequence programs, and in Step 306, the percentages of execution periods obtained are set. Alternatively, a step of determining whether or not the procedure to perform Step 307 or not may be provided.

Alternatively, it may be arranged as follows: It is determined whether or not the sum of the execution periods for the individual sequence programs in one execution cycle obtained in Step 303 exceeds the period of one execution cycle (8ms). If the sum exceeds the execution period, an alarm is given to advise that the target scan time ratio should be replaced. When the target scan time ratio is replaced, the processing of Step 301 and the subsequent steps is performed. These steps are repeated until it is determined that the sum of the execution-period percentages does not exceed 100%. In the case in which an alarm is given so that the target scan time ratio will be replaced, it may be arranged as follows: It is determined whether or not the sum of the execution periods for the individual sequence programs in one execution cycle obtained in Step 303 exceeds the period of one execution cycle (8ms). If the sum exceeds the period of one execution cycle, it is advised that the target scan time ratio should be replaced. If not, Step 304 is performed, namely the execution percentages for the individual sequence programs are obtained. Then the execution percentages obtained are set.

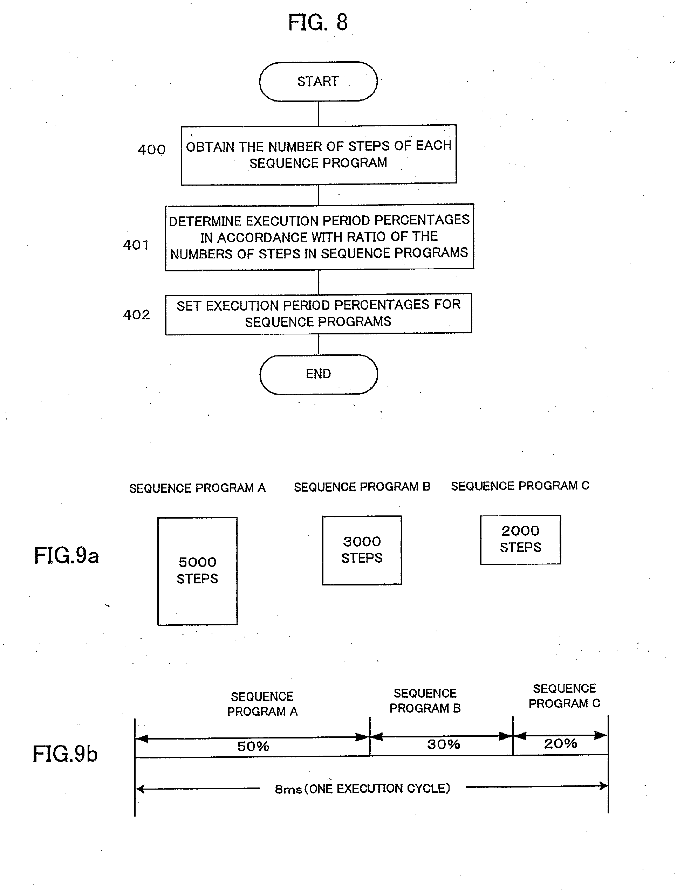

FIG. 8 is a flowchart showing the process of execution-period percentage adjustment performed by the processor 11 of the programmable controller in a fourth embodiment of the present invention. In the fourth embodiment, the percentages of execution periods for individual sequence programs are adjusted depending on the number of steps included in each of the sequence programs. FIGS. 9a and 9b are diagrams for explaining an example of the fourth embodiment. In the example of FIGS. 9a and 9b, suppose that the numbers of steps included in three sequence programs A, B and C are "5000", "3000" and "2000", respectively, as shown in FIG. 9a. When an automatic adjustment command is inputted from the data input device 19, the processor 11 of the programmable controller 10 starts the process shown as a flowchart in FIG. 8.

From the program size written at the beginning of each of the sequence programs installed, the number of steps included in each of the sequence programs is read (Step 400). On the basis of a ratio among the numbers of steps, the ratio based on which the percentages of execution periods for the individual sequence programs in one execution cycle should be determined is obtained and set (Steps 401, 402), with which the automatic adjustment terminates.

In the example of FIGS. 9a and 9b, the numbers of steps included in sequence programs A, B and C are 5000, 3000 and 2000, respectively. Hence, as shown in FIG. 9b, the execution period is divided in the ratio of 5:3:2, so that the percentages of execution periods for sequence programs A, B and C are determined to be 50%, 30% and 20%, respectively.

In the above-described embodiments, by inputting an execution-period percentage automatic adjustment command, etc. into the programmable controller, adjustment is automatically performed so that the same length of scan time will be achieved, that the predetermined targets for scan time will be achieved, that the predetermined target scan time ratio will be achieved, or that the percentages of execution periods depending on the numbers of steps included in the sequence programs will be achieved. It may be so arranged that from these types of execution-period percentage automatic adjustment, one can be selected. For example, in an execution-period percentage automatic adjustment mode, conditions for feasible automatic adjustment are displayed on the display device 18. By selecting a desired condition from them and inputting information required as additional conditions for automatic adjustment, one type of automatic adjustment is performed.

For example, as the conditions for automatic adjustment, the types of automatic adjustments "achieving same scan time" "achieving targets for scan time", "achieving target scan time ratio" and "achieving percentages depending on numbers of steps" are displayed so that an operator will select one using the data input device 19. When the condition "achieving same scan time" is selected, the processor 11 of the programmable controller 10 performs the process shown in FIG. 2. When the condition "achieving targets for scan time" is selected and targets for scan time are set, the processor 11 performs the process shown in FIG. 4. When the condition "achieving target scan time ratio" is selected and a target scan time ratio is set, the processor 11 performs the process shown in FIG. 6. When the condition "achieving percentages depending on numbers of steps" is selected, the processor 11 performs the process shown in FIG. 8. In each case, the processor 11 of the programmable controller 10 automatically adjusts execution-period percentages.

## Claims

1. A programmable controller for executing a plurality of sequence programs by repeating an execution cycle of successively executing fractions of the plurality of sequence programs, comprising:

    measuring means for measuring total execution time taken for actually executing each of the plurality of sequence programs; and

execution period allotting ratio calculating means for calculating a ratio of allotting an execution period for each of the plurality of sequence programs in one execution cycle such that lengths of scan time of the plurality of sequence programs are the same based on the measured total execution time for each of the plurality of sequence programs,

wherein the plurality of sequence programs are executed by repeating the execution cycle of successively executing fractions of the plurality of sequence programs according to the calculated execution period allotting ratio.

2. A programmable controller for executing a plurality of sequence programs by repeating an execution cycle of successively executing fractions of the plurality of sequence programs, comprising:

input means for setting target scan time for each of the sequence programs;
measuring means for measuring total execution time taken for actually executing each of the plurality of sequence programs; and
execution period allotting ratio calculation means for calculating a ratio of allotting an execution period for each of the plurality of sequence programs in one execution cycle based on the set target scan time and the measured total execution time for each of the plurality of sequence programs,

wherein the plurality of sequence programs are executed by repeating the execution cycle of successively executing fractions of the plurality of sequence programs according to the calculated execution period allotting ratio.

3. A programmable controller for executing a plurality of sequence programs by repeating an execution cycle of successively executing fractions of the plurality of sequence programs, comprising:

input means for setting a target scan time ratio for the plurality of sequence programs;
measuring means for measuring total execution time taken for actually executing each of the plurality of sequence programs; and
execution period allotting ratio determining means for determining a ratio of allotting an execution period for each of the plurality of sequence programs in one execution cycle based on the set target scan time ratio and the measured total execution time for each of the plurality of sequence programs,

wherein the plurality of sequence programs are executed by repeating the execution cycle of successively executing fractions of the plurality of sequence programs according to the determined execution period allotting ratio.

4. A programmable controller for executing a plurality of sequence programs by repeating an execution cycle of successively executing fractions of the plurality of sequence programs, comprising:

means for determining the number of steps in each of the plurality of sequence programs; and
execution period allotting ratio determining means for determining a ratio of allotting an execution period for each of the plurality of sequence programs in one execution cycle based on the determined number of steps in each of the sequence programs,

wherein the plurality of sequence programs are executed by repeating the execution cycle of successively executing fractions of the plurality of sequence programs according to the determined execution period allotting ratio.

5. A programmable controller for executing a plurality of sequence programs by repeating an execution cycle of successively executing fractions of the plurality of sequence programs, comprising:

measuring means for measuring total execution time taken for actually executing each of the plurality of sequence programs;
condition input means for setting a condition for adjusting an execution period allotting ratio of allotting an execution period for each of the plurality of sequence programs in one execution cycle; and
execution period allotting ratio determining means for determining the execution period allotting ratio based on the measured total time for each of the plurality of sequence programs and the set condition,

wherein the plurality of sequence programs are executed by repeating the execution cycle of successively executing fractions of the plurality of sequence programs according to the determined execution period allotting ratio.

6. A programmable controller according to claim 5, wherein said condition inputting means allows selection and inputting of one condition from among a condition of setting the same length of scan time of the plurality of sequence programs, a condition of setting a target scan time for each of the plurality of sequence programs, a condition of setting a target scan time ratio for the plurality of sequence programs, and a condition of calculating the execution period allotting ratio in accordance with a ratio of the numbers of steps in the plurality of sequence programs.

# FIG. 1

# FIG. 2

START

100 — EXECUTE SEQUENCE PROGRAMS ACCORDING TO PREDETERMINED EXECUTION PERIOD PERCENTAGES, AND MEASURE ACTUAL EXECUTION TIME FOR EACH SEQUENCE PROGRAM

101 — CALCULATE TOTAL EXECUTION TIME FOR EACH SEQUENCE PROGRAM

102 — CALCULATE MINIMUM NUMBER OF EXECUTION CYCLES REQUIRED FOR TOTAL EXECUTION TIME

103 — CALCULATE EXECUTION PERIOD FOR EACH SEQUENCE PROGRAM IN ONE EXECUTION CYCLE

104 — CALCULATE EXECUTION PERIOD PERCENTAGES FOR SEQUENCE PROGRAMS BASED ON ALLOTTED EXECUTION PERIODS IN ONE EXECUTION CYCLE

105 — SET CALCULATED EXECUTION PERIOD PERCENTAGES

END

EP 1 505 462 A2

**FIG.3a**

| SEQUENCE PROGRAM A | SEQUENCE PROGRAM B | SEQUENCE PROGRAM C |
|---|---|---|
| 33% | 33% | 33% |

8ms (ONE EXECUTION CYCLE)

| SEQUENCE PROGRAM A | SEQUENCE PROGRAM B | SEQUENCE PROGRAM C |
|---|---|---|
| SCAN TIME 24ms | 16ms | 8ms |

**FIG.3b**

2.6ms     2.6ms     2.1ms

33%       33%       33%

8ms       8ms       8ms

SEQUENCE PROGRAM A: 2.6+2.6+2.1＝7.3ms

**FIG.3c**

2.6ms     2.4ms

33%       33%

8ms       8ms

SEQUENCE PROGRAM B: 2.6+2.4＝5.0ms

**FIG.3d**

2.5ms

33%

8ms

SEQUENCE PROGRAM C: 2.5ms

**FIG.3e**

| SEQUENCE PROGRAM A | SEQUENCE PROGRAM B | SEQUENCE PROGRAM C | UNALLOTTED |
|---|---|---|---|
| 46% | 31% | 16% | 7% |

8ms (ONE EXECUTION CYCLE)

| SEQUENCE PROGRAM A | SEQUENCE PROGRAM B | SEQUENCE PROGRAM C |
|---|---|---|
| SCAN TIME 16ms | 16ms | 16ms |

13

# FIG. 4

START

200 EXECUTE SEQUENCE PROGRAMS ACCORDING TO PREDETERMINED EXECUTION PERIOD PERCENTAGES, AND MEASURE ACTUAL EXECUTION TIME FOR EACH SEQUENCE PROGRAM

201 CALCULATE THE NUMBER OF CYCLES REQUIRED FOR SET TARGET SCAN TIME FOR EACH SEQUENCE PROGRAM

202 CALCULATE EXECUTION PERIOD FOR EACH SEQUENCE PROGRAM IN ONE EXECUTION CYCLE TO ACHIEVE SET TARGET SCAN TIME

203 CALCULATE EXECUTION PERIOD PERCENTAGE OF EACH SEQUENCE PROGRAM BASED ON EACH EXECUTION PERIOD IN ONE EXECUTION CYCLE

204 SUM OF EXECUTION PERIOD PERCENTAGES EXCEEDS 100% ?

No

Yes

205 ALTER EXECUTION PERIOD PERCENTAGES SO THAT THE SUM IS WITHIN 100%

206 SET OBTAINED EXECUTION PERIOD PERCENTAGES

END

FIG.5a

| SEQUENCE PROGRAM A | SEQUENCE PROGRAM B | SEQUENCE PROGRAM C |
|---|---|---|
| 33% | 33% | 33% |

8ms (ONE EXECUTION CYCLE)

| | SEQUENCE PROGRAM A | SEQUENCE PROGRAM B | SEQUENCE PROGRAM C |
|---|---|---|---|
| SCAN TIME | 24ms | 16ms | 8ms |

FIG.5b

| | SEQUENCE PROGRAM A | SEQUENCE PROGRAM B | SEQUENCE PROGRAM C |
|---|---|---|---|
| TARGET SCAN TIME | 16ms | 16ms | 8ms |

FIG.5c

2.6ms    2.6ms    2.1ms
33%    33%    33%
8ms    8ms    8ms

SEQUENCE PROGRAM A: 2.6+2.6+2.1=7.3ms

FIG.5d

2.6ms    2.4ms
33%    33%
8ms    8ms

SEQUENCE PROGRAM B: 2.6+2.4=5.0ms

FIG.5e

2.5ms
33%
8ms

SEQUENCE PROGRAM C: 2.5ms

FIG.5f

| SEQUENCE PROGRAM A | SEQUENCE PROGRAM B | SEQUENCE PROGRAM C |
|---|---|---|
| 46% | 31% | 31% |

8ms (ONE EXECUTION CYCLE)

FIG.5g

| SEQUENCE PROGRAM A | SEQUENCE PROGRAM B | SEQUENCE PROGRAM C |
|---|---|---|
| 42% | 29% | 29% |

8ms (ONE EXECUTION CYCLE)

| | SEQUENCE PROGRAM A | SEQUENCE PROGRAM B | SEQUENCE PROGRAM C |
|---|---|---|---|
| SCAN TIME | 24ms | 24ms | 16ms |

# FIG. 6

START

300 — EXECUTE SEQUENCE PROGRAMS ACCORDING TO PREDETERMINED EXECUTION PERIOD PERCENTAGES, AND MEASURE ACTUAL EXECUTION TIME FOR EACH SEQUENCE PROGRAM

301 — CALCULATE TARGET SCAN TIME FOR EACH SEQUENCE PROGRAM BASED ON SET TARGET SCAN TIME RATIO

302 — CALCULATE THE NUMBER OF CYCLES REQUIRED FOR TARGET SCAN TIME FOR EACH SEQUENCE PROGRAM

303 — CALCULATE EXECUTION PERIOD FOR EACH SEQUENCE PROGRAM IN ONE EXECUTION CYCLE TO ACHIEVE SET TARGET SCAN TIME

304 — CALCULATE EXECUTION PERIOD PERCENTAGE OF EACH SEQUENCE PROGRAM BASED ON EACH EXECUTION PERIOD IN ONE EXECUTION CYCLE

305 — SUM OF EXECUTION PERIOD PERCENTAGES EXCEEDS 100% ?

Yes → 307 — INCREASE PERIOD BY WHICH EACH NUMBER OF TARGET SCAN TIME RATIO IS MULTIPLIED

No

306 — SET OBTAINED EXECUTION PERIOD PERCENTAGES

END

**FIG.7a**

| SEQUENCE PROGRAM A | SEQUENCE PROGRAM B | SEQUENCE PROGRAM C |
|---|---|---|
| 33% | 33% | 33% |

8ms (ONE EXECUTION CYCLE)

SCAN TIME

| SEQUENCE PROGRAM A | SEQUENCE PROGRAM B | SEQUENCE PROGRAM C |
|---|---|---|
| 24ms | 16ms | 8ms |

**FIG.7b**

| SEQUENCE PROGRAM A | SEQUENCE PROGRAM B | SEQUENCE PROGRAM C |
|---|---|---|
| SCAN TIME RATIO 2 | 3 | 2 |

**FIG.7c**

| 2.6ms | 2.6ms | 2.1ms |
|---|---|---|
| 33% | 33% | 33% |
| 8ms | 8ms | 8ms |

SEQUENCE PROGRAM A: 2.6+2.6+2.1=7.3ms

**FIG.7d**

| 2.6ms | 2.4ms |
|---|---|
| 33% | 33% |
| 8ms | 8ms |

SEQUENCE PROGRAM B: 2.6+2.4=5.0ms

**FIG.7e**

| 2.5ms |
|---|
| 33% |
| 8ms |

SEQUENCE PROGRAM C: 2.5ms

**FIG.7f**

| SEQUENCE PROGRAM A | SEQUENCE PROGRAM B | SEQUENCE PROGRAM C | UNALLOTTED |
|---|---|---|---|
| 46% | 21% | 16% | 17% |

8ms (ONE EXECUTION CYCLE)

SCAN TIME

| SEQUENCE PROGRAM A | SEQUENCE PROGRAM B | SEQUENCE PROGRAM C |
|---|---|---|
| 16ms | 24ms | 16ms |

# FIG. 8

START

400 OBTAIN THE NUMBER OF STEPS OF EACH SEQUENCE PROGRAM

401 DETERMINE EXECUTION PERIOD PERCENTAGES IN ACCORDANCE WITH RATIO OF THE NUMBERS OF STEPS IN SEQUENCE PROGRAMS

402 SET EXECUTION PERIOD PERCENTAGES FOR SEQUENCE PROGRAMS

END

SEQUENCE PROGRAM A    SEQUENCE PROGRAM B    SEQUENCE PROGRAM C

FIG.9a

5000 STEPS

3000 STEPS

2000 STEPS

FIG.9b

SEQUENCE PROGRAM A    SEQUENCE PROGRAM B    SEQUENCE PROGRAM C

50%    30%    20%

8ms (ONE EXECUTION CYCLE)